# EUROPEAN PATENT APPLICATION

(11) **EP 3 016 447 A1**
(43) Date of publication of application: **04.05.2016**
(21) Application number: 14817311.5
(22) Date of filing: 17.06.2014
(51) Int. Cl.: H04W 52/02

(54) **MOBILE STATION**

(30) Priority: 25.06.2013 JP 2013132775
(71) Applicant: NTT DOCOMO, INC., Chiyoda-ku Tokyo 100-6150 (JP)
(72) Inventor: UCHINO, Tooru, Tokyo 100-6150 (JP); SAGAE, Yuta, Tokyo 100-6150 (JP)
(74) Representative: Hoffmann Eitle
(86) International application number: PCT/JP2014/066026
(87) International publication number: WO 2014/208402

(57) **Abstract**

Even equipped with "Advanced Receiver functionality", a mobile station UE according to the present invention achieves appropriate battery saving. The mobile station UE according to the present invention includes: a determination unit 11 configured to determine whether or not there is a possibility of allocation of any of resource for uplink data and resource for downlink data to the mobile station UE; and a switch unit 12 configured to halt the "Advanced Receiver functionality" when the determination unit 11 determines that there is no possibility of the allocation.

## Description

### TECHNICAL FIELD

The present invention relates to a mobile station.

### BACKGROUND ART

Release-8 of LTE (Long Term Evolution) defined specifications based on "MMSE (Minimum Mean Square Error) Receiver" or "MRC (Maximum Ratio Combining) Receiver".

Meanwhile, Release-11 of LTE has introduced a concept called "Advanced Receiver functionality" specified for the purpose of improving the performance for coping with interference from a cell other than a serving cell, as compared with usual Receiver.

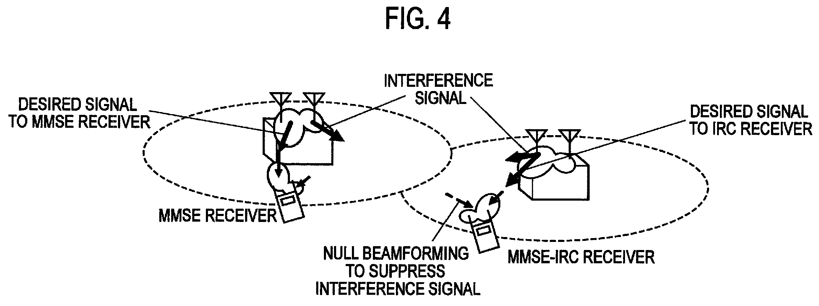

For example, as illustrated in Fig. 4, the "Advanced Receiver functionality" includes "MMSE-IRC Receiver function", "CRS Canceller function (not illustrated)", and the like.

Meanwhile, for the purpose of battery saving of a mobile station UE, LTE and LTE-Advanced provide specifications that enable DRX (Discontinuous Reception) control by which the mobile station UE in an RRC_Connected state transitions to a DRX state (see Non-patent document 1).

Specifically, the mobile station UE in the DRX state is configured to transition between an Active state and an Inactive state.

Here, the mobile station UE in the Active state is configured to monitor a PDCCH (physical downlink control channel), and report feedback information to a radio base station eNB. The feedback information includes, for example, CQI (Channel Quality Indicator), PMI (Precoding Matrix Indicator) , RI (Rank Indicator) , PTI (Precoding Type Indicator) , and the like.

Meanwhile, the mobile station UE in the Inactive state is configured not to monitor the PDCCH, nor to report the feedback information to the radio base station eNB. Thus, the battery saving of the mobile station UE can be attained.

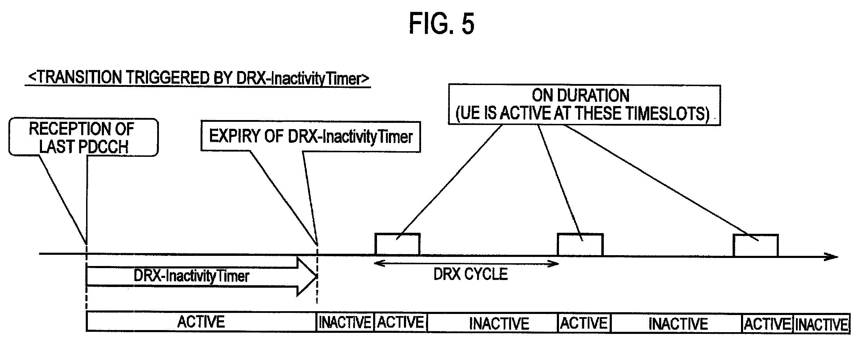

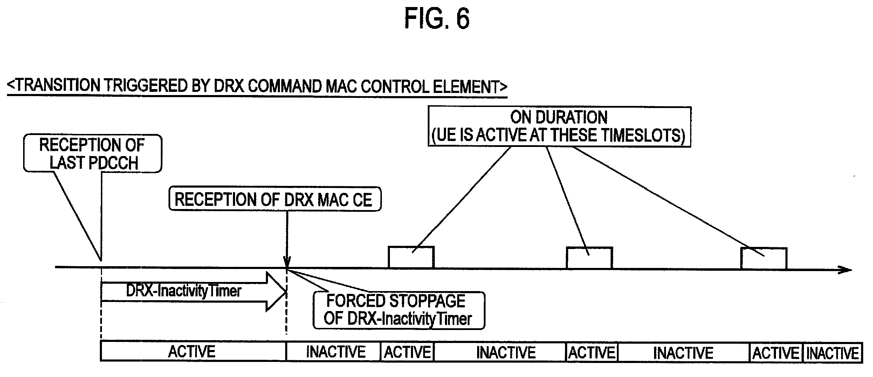

The mobile station UE turns into the Active state in any of the following cases, and turns into the Inactive state in the other cases:
- Case where any of "On duration timer", "drx-InactivityTimer", "drx-RetransmissionTimer", and "mac-contentionResolutionTimer" is running;
- Case where a Scheduling Request is transmitted;
- Case where "UL grant" for retransmission of HARQ (Hybrid ARQ) in an uplink is assigned; and
- Case where a downlink control signal instructing a new transmission is yet to be received via the PDCCH after reception of a Random Access Resuponse. Figs. 5 and 6 illustrate operations of a mobile station UE set to transition to the DRX state.

### PRIOR ART DOCUMENT

### NON-PATENT DOCUMENT

Non-patent document 1: 3GPP TS36.321

### SUMMARY OF THE INVENTION

### PROBLEM TO BE SOLVED BY THE INVENTION

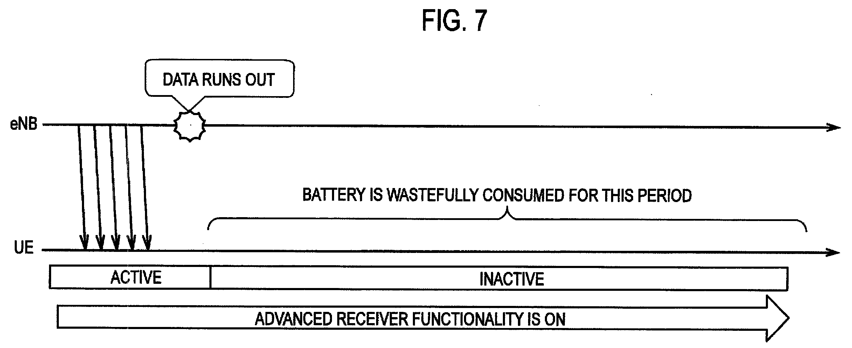

As illustrated in Fig. 7, however, if the mobile station UE supporting "Advanced Receiver functionality" always keeps the "Advanced Receiver functionality" ON, the mobile station UE wastefully consumes power even when there is no data to be transmitted or received. Hence, such operation is undesirable from the viewpoint of battery saving.

For example, since the mobile station UE in the DRX state (Inactive state) has no data to be transmitted and received, the required reception characteristics are not severe. For this reason, even if the reception characteristics to be satisfied are relaxed to a certain degree, the mobile station UE does not have a problem in terms of performance.

In CA (Carrier Aggregation) introduced in Release-10 of LTE (LTE-Advanced), the mobile station UE performs communications with multiple CCs (Component Carriers) aggregated. If the "Advanced Receiver functionality" is always kept ON even while the mobile station UE is not performing communications in a Scell in a Deactive state (inactive state), the power is wastefully consumed, which is undesirable from the viewpoint of battery saving.

Therefore, the present invention was made in view of the foregoing problem, and has an objective to provide a mobile station capable of achieving battery saving appropriately even if the mobile station has "Advanced Receiver functionality".

A first feature of the present invention is a mobile station supporting advanced receiver functionality, the mobile station including: a determination unit configured to determine whether or not there is a possibility of allocation of any of resource for uplink data and resource for downlink data to the mobile station; and a switch unit configured to halt the advanced receiver functionality when the determination unit determines that there is no possibility of the allocation.

A second feature of the present invention is a mobile station supporting advanced receiver functionality, the mobile station including: a determination unit configured to determine whether or not there is a possibility of allocation of any of resource for uplink data and resource for downlink data to the mobile station; and a switch unit configured to relax a reception characteristic to be satisfied by the advanced receiver functionality, when the determination unit determines that there is no possibility of the allocation.

### BRIEF DESCRIPTION OF THE DRAWINGS

[Fig. 1] Fig. 1 is an overall configuration diagram of a mobile communication system according to an embodiment of the present invention.
[Fig. 2] Fig. 2 is a functional block diagram of a mobile station according to the embodiment of the present invention.
[Fig. 3] Fig. 3 is a flowchart illustrating an operation of the mobile station according to the embodiment of the present invention.
[Fig. 4] Fig. 4 relates to a prior art, and is a diagram for explaining "MMSE-IRC Receiver functionality" of "Advanced Receiver functionality".
[Fig. 5] Fig. 5 relates to the prior art, and is a diagram for explaining an operation of a mobile station set to transition to a DRX state in response to DRX-InactivityTimer.
[Fig. 6] Fig. 6 relates to the prior art, and is a diagram for explaining an operation of a mobile station set to transition to the DRX state in response to DRX command MAC CE.
[Fig. 7] Fig. 7 relates to the prior art, and is a diagram for explaining a problem caused when a mobile station always keeps "Advanced Receiver functionality" ON.

### MODE FOR CARRYING OUT THE INVENTION

### (Mobile Communication System According to Embodiment of the Present Intention)

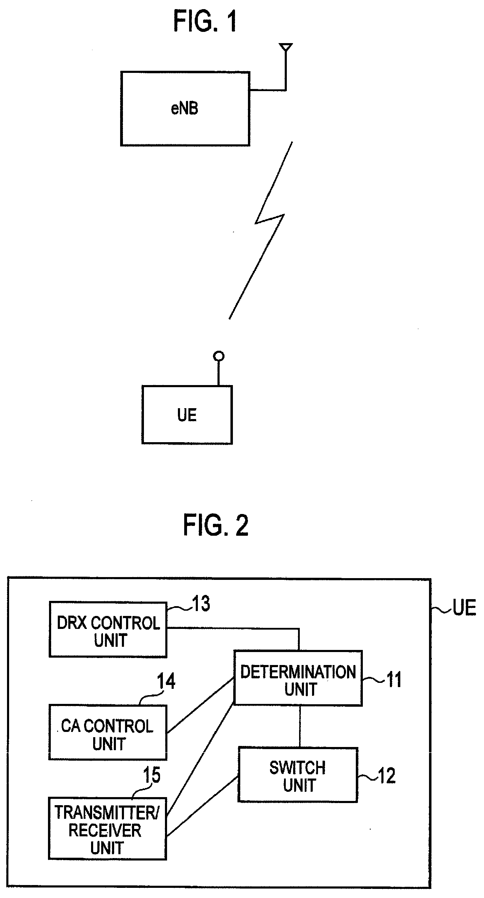

With reference to Figs. 1 to 3, description is provided for a mobile communication system according to an embodiment of the present invention.

The mobile communication system according to the present embodiment is an LTE-Advanced mobile communication system, and includes a radio base station eNB as illustrated in Fig. 1.

The mobile communication system according to the present embodiment is configured such that CA (Carrier Aggregation) using multiple CCs (Component Carriers) can be performed between the mobile station UE and the radio base station eNB.

In addition, in the mobile communication system according to the present embodiment, the radio base station eNB is configured to be able to set the mobile station UE to start DRX control, by using RRC signaling.

Note that the mobile station UE according to the present embodiment supports "Advanced Receiver functionality". For example, the "Advanced Receiver functionality" is functionality configured to be able to reduce interference from a cell other than a serving cell.

Here, the "Advanced Receiver functionality" may be functionality equipped with any technique for improving a reception characteristic of the mobile station UE.

As illustrated in Fig. 2, the mobile station UE according to the present embodiment includes a determination unit 11, a switch unit 12, a DRX control unit 13, a CA control unit 14, and a transmitter/receiver unit 15.

The determination unit 11 is configured to determine whether or not there is a possibility of allocation of any of resource for uplink data and resource for downlink data to the mobile station UE.

For example, the determination unit 11 may be configured to determine that there is no possibility of the aforementioned allocation in the case where the DRX control is started on the mobile station UE.

In other words, the determination unit 11 may be configured to determine that there is no possibility of the aforementioned allocation in the case where the mobile station UE is set to perform DRX control in response to an RRC message transmitted from the radio base station eNB.

Alternatively, the determination unit 11 may be configured to determine that there is no possibility of the aforementioned allocation in the case where the mobile station UE transitions to the DRX state.

Specifically, the determination unit 11 may be configured to determine that there is no possibility of the aforementioned allocation in a case, for example, where "drx-InactivityTimer" expires, or where "DRX command MAC CE" is received.

Otherwise, the determination unit 11 may be configured to determine that there is no possibility of the aforementioned allocation when a predetermined period passes after downlink data addressed to the mobile station UE and uplink data to be transmitted by the mobile station UE run out.

Instead, the determination unit 11 may be configured to determine that there is no possibility of the aforementioned allocation in response to an instruction from a network.

Specifically, the determination unit 11 may be configured to determine that there is no possibility of the aforementioned allocation if an instruction to halt the "Advanced Receiver functionality" is given by an RRC message or a MAC message.

As another option, the determination unit 11 may be configured to determine that there is no possibility of the aforementioned allocation when a Scell transitions to the Deactive state.

To be specific, the determination unit 11 may be configured to determine that there is no possibility of the aforementioned allocation when "sCellDeactivationTimer" expires, or when "Deactivation command MAC CE" is received, for example.

As another option, the determination unit 11 may be configured to determine that there is no possibility of the aforementioned allocation when a certain period passes after last allocation of resource for uplink data or resource for downlink data in the Scell.

As another option, the determination unit 11 may be configured to determine that there is no possibility of allocation of any of resource for uplink data and resource for downlink data to the mobile station UE in a particular Scell, when an instruction to halt the "Advanced Receiver functionality" in the particular Scell is given by an RRC message or a MAC message.

The switch unit 12 is configured to halt (turn OFF) the "Advanced Receiver functionality" if the determination unit 11 determines that there is no possibility of allocation of any of resource for uplink data and resource for downlink data to the mobile station UE.

Here, the switch unit 12 may be configured to halt the "Advanced Receiver functionality" for a Scell when the determination unit 11 determines that there is no possibility of allocation of any of resource for uplink data and resource for downlink data to the mobile station UE in the Scell because the Scell transitions to the Deactive state.

As another option, the switch unit 12 may be configured to halt the "Advanced Receiver functionality" for a Scell when the determination unit 11 determines that there is no possibility of allocation of any of resource for uplink data and resource for downlink data to the mobile station UE in the Scell because a certain period passes after last allocation of resource for uplink data or resource for downlink data in the Scell.

As another option, the switch unit 12 may be configured to halt the "Advanced Receiver functionality" for a particular Scell when the determination unit 11 determines that there is no possibility of allocation of any of resource for uplink data and resource for downlink data to the mobile station UE in the particular Scell because an instruction to halt the "Advanced Receiver functionality" for the particular Scell is given by an RRC message or a MAC message.

Here, there is a case where multiple Scells (or cells) share the same "Advanced Receiver functionality". For this case, the switch unit 12 may be configured to halt the "Advanced Receiver functionality" for the multiple Scells if all the multiple Scells transition to the Deactive state.

As another option, the switch unit 12 may be configured to relax reception characteristics to be satisfied by the "Advanced Receiver functionality", instead of halting the "Advanced Receiver functionality", when the determination unit 11 determines that there is no possibility of allocation of any of resource for uplink data and resource for downlink data to the mobile station UE.

Here, the switch unit 12 maybe configured to restart (turn ON) the "Advanced Receiver functionality" at a timing when allocation of resource for downlink data is expected to be made, such as a timing several milliseconds before "On duration" or a timing while "drx-InactivityTimer" is running.

In addition, the switch unit 12 may be configured to restart (turn ON) the "Advanced Receiver functionality" at a timing when allocation of resource for uplink data is expected to be made, such as a timing when uplink data is generated, when "Scheduling Request" is triggered (in other words, an RA (Random Access) procedure is started), or when a BSR (Buffer Status Report) is to be transmitted.

Further, the switch unit 12 may be configured to restart (turn ON) the "Advanced Receiver functionality" when an instruction to restart (turn ON) the "Advanced Receiver functionality" is given by an RRC message or a MAC message.

Moreover, the switch unit 12 may be configured to restart (turn ON) the "Advanced Receiver functionality" for a particular Scell when the particular Scell transitions to the Active state (in other words, when Activation Command is received).

Instead, the switch unit 12 may be configured to restart (turn ON) the "Advanced Receiver functionality" for a particular Scell when the particular Scell transitions to the Active state, and when quality of downlink of the particular Scell satisfies a predetermined condition (when good CQI information is held).

As another option, the switch unit 12 may be configured to restart (turn ON) the "Advanced Receiver functionality" for a particular Scell when an instruction to restart (turn ON) the "Advanced Receiver functionality" for the particular Scell is given by an RRC message or MAC message.

Here, the switch unit 12 may be configured to abort ON/OFF switching processing on the "Advanced Receiver functionality" when the state of the mobile station UE changes during the ON/OFF switching processing on the "Advanced Receiver functionality" .

The DRX control unit 13 is configured to perform DRX control in the mobile station UE. The CA control unit 14 is configured to perform control for CA in the mobile station UE. The transmitter/receiver unit 15 is configured to transmit and receive signals to and from the radio base station eNB.

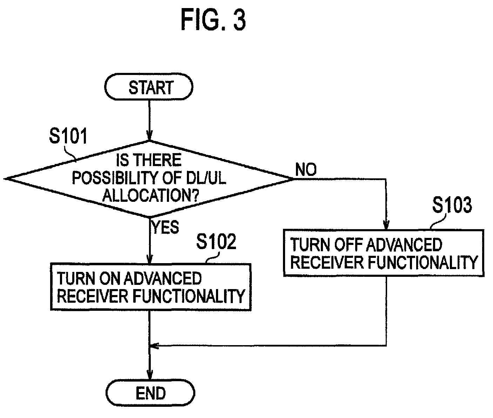

Hereinafter, with reference to Fig. 3, description is provided for an operation of the mobile communication system according to the present embodiment, or more specifically, an operation of the mobile station UE according to the present embodiment.

As illustrated in Fig. 3, in step S101, the mobile station UE determines whether there is a possibility of allocation of any of resource for uplink data and resource for downlink data to the mobile station UE.

Here, the operation advances to step S102 if it is determined that the possibility of such allocation is present, or the operation advances to step S103 if it is determined that the possibility of such allocation is absent.

In step S102, the mobile station UE restarts (turns ON) the "Advanced Receiver functionality".

Meanwhile, in step S103, the mobile station UE halts (turns OFF) the "Advanced Receiver functionality".

The features of the present embodiment may be expressed as follows.

In summary, a first feature of the present embodiment is a mobile station UE supporting "Advanced Receiver functionality (advanced receiver functionality)", the mobile station UE including: a determination unit 11 configured to determine whether there is a possibility of allocation of any of resource for uplink data and resource for downlink data to the mobile station UE; and a switch unit 12 configured to halt the "Advanced Receiver functionality" if the determination unit 11 determines that there is no possibility of such allocation.

According to this feature, the "Advanced Receiver functionality" is halted when there is no possibility of allocation of any of resource for uplink data and resource for downlink data to the mobile station UE. Thereby, the power consumption can be reduced, and thus appropriate battery saving can be achieved.

In the first feature of the present embodiment, the determination unit 11 may be configured to determine that there is no possibility of the aforementioned allocation when DRX control (discontinuous reception control) is started on the mobile station UE.

According to this feature, the "Advanced Receiver functionality" is halted when the DRX control is started on the mobile station UE. Thereby, the power consumption can be reduced, and thus appropriate battery saving can be achieved.

In the first feature of the present embodiment, the determination unit 11 may be configured to determine that there is no possibility of the aforementioned allocation when the mobile station UE transitions to the DRX state (discontinuous reception state).

According to this feature, the "Advanced Receiver functionality" is halted when the mobile station UE transitions to the DRX state. Thereby, the power consumption can be reduced, and thus appropriate battery saving can be achieved.

In the first feature of the present embodiment, the determination unit 11 may be configured to determine that there is no possibility of the aforementioned allocation when a predetermined period passes after downlink data addressed to the mobile station UE and uplink data to be transmitted by the mobile station UE run out.

According to this feature, the "Advanced Receiver functionality" is halted when the predetermined period passes after downlink data addressed to the mobile station UE and uplink data to be transmitted by the mobile station UE run out. Thereby, the power consumption can be reduced, and thus appropriate battery saving can be achieved.

In addition, according to this feature, the "Advanced Receiver functionality" can be halted at a timing different from a timing when "drx-InactivityTimer" expires.

In the first feature of the present embodiment, the determination unit 11 may be configured to determine that there is no possibility of the aforementioned allocation in response to an instruction from a network.

According to this feature, the "Advanced Receiver functionality" is halted when an instruction from a network is given. Thereby, the power consumption can be reduced, and thus appropriate battery saving can be achieved.

In other words, according to this feature, battery saving in the mobile station UE can be achieved in accordance with a policy of a telecommunication carrier which is operating the network.

In the first feature of the present embodiment, the determination unit 11 may be configured to determine that there is no possibility of the aforementioned allocation when a Scell (secondary cell) transitions to a Deactive state (inactive state), and the switch unit 12 may be configured to halt "Advanced Receiver functionality" for the Scell.

According to this feature, the "Advanced Receiver functionality" for the Scell having transitioned to the Deactive state is halted. Thereby, the power consumption can be reduced, and thus appropriate battery saving can be achieved.

In other words, according to this feature, the "Advanced Receiver functionality" can be halted on a Scell-by-Scell basis, and thereby more efficient battery saving can be achieved.

In the first feature of the present embodiment, the determination unit 11 may be configured to determine that there is no possibility of the aforementioned allocation when a predetermined period passes after last allocation of resource for uplink data or resource for downlink data in a Scell, and the switch unit 12 may be configured to halt "Advanced Receiver functionality" for this Scell.

According to this feature, the "Advanced Receiver functionality" is halted for the Scell in which the predetermined period passes after the last allocation of the resource for uplink data or the resource for downlink data. Thereby, the power consumption can be reduced, and thus appropriate battery saving can be achieved.

In other words, according to this feature, the "Advanced Receiver functionality" can be halted on a Scell-by-Scell basis, and thereby more efficient battery saving can be achieved.

In summary, a second feature of the present embodiment is a mobile station UE supporting "Advanced Receiver functionality (advanced receiver functionality)", the mobile station UE including: a determination unit 11 configured to determine whether or not there is a possibility of allocation of any of resource for uplink data and resource for downlink data to the mobile station UE; and a switch unit 12 configured to relax a reception characteristic to be satisfied by the "Advanced Receiver functionality" when the determination unit 11 determines that there is no possibility of such allocation.

According to this feature, when there is no possibility of allocation of any of resource for uplink data and resource for downlink data to the mobile station UE, the reception characteristic to be satisfied by the "Advanced Receiver functionality" is relaxed. This makes it possible to reduce the power consumption, and thus to achieve appropriate battery saving.

It should be noted that the foregoing operations of the mobile station UE and the radio base station eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base station eNB. Otherwise, the storage medium and the processor may be provided as discrete components inside the mobile station UE and the radio base station eNB.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2013-132775 (filed on June 25, 2013) is incorporated by reference in the present specification.

### INDUSTRIAL APPLICABILITY

According to the present invention, a mobile station can be provided which is capable of achieving appropriate battery saving even if the mobile station has "Advanced Receiver functionality", as described above.

### EXPLANATION OF THE REFERENCE NUMERALS

- eNB: radio base station
- UE: mobile station
- 11: determination unit
- 12: switch unit
- 13: DRX control unit
- 14: CA control unit
- 15: transmitter/receiver unit

## Claims

1. A mobile station equipped with advanced receiver functionality, the mobile station comprising:
a determination unit configured to determine whether or not there is a possibility of allocation of any of resource for uplink data and resource for downlink data to the mobile station; and
a switch unit configured to halt the advanced receiver functionality when the determination unit determines that there is no possibility of the allocation.

2. The mobile station according to claim 1, wherein the determination unit is configured to determine that there is no possibility of the allocation when discontinuous reception control is started on the mobile station.

3. The mobile station according to claim 1, wherein the determination unit is configured to determine that there is no possibility of the allocation when the mobile station transitions to a discontinuous reception state.

4. The mobile station according to claim 1, wherein the determination unit is configured to determine that there is no possibility of the allocation when a predetermined period passes after downlink data addressed to the mobile station UE and uplink data to be transmitted by the mobile station UE run out.

5. The mobile station according to claim 1, wherein the determination unit is configured to determine that there is no possibility of the allocation in response to an instruction from a network.

6. The mobile station according to claim 1, wherein
the determination unit is configured to determine that there is no possibility of the allocation when a secondary cell transitions to an inactive state, and
the switch unit is configured to halt the advanced receiver functionality for the secondary cell.

7. The mobile station according to claim 1, wherein
the determination unit is configured to determine that there is no possibility of the allocation when a predetermined period passes after last allocation of resource for uplink data or resource for downlink data in a secondary cell, and
the switch unit is configured to halt the advanced receiver functionality for the secondary cell.

8. A mobile station equipped with advanced receiver functionality, the mobile station comprising:
a determination unit configured to determine whether or not there is a possibility of allocation of any of resource for uplink data and resource for downlink data to the mobile station; and
a switch unit configured to relax a reception characteristic to be satisfied by the advanced receiver functionality, when the determination unit determines that there is no possibility of the allocation.
